# NEUE EUROPÄISCHE PATENTSCHRIFT

(11) **EP 1 493 215 B2**
(45) Veröffentlichungstag und Bekanntmachung des Hinweises auf die Entscheidung über den Einspruch: **17.08.2016**
(45) Hinweis auf die Patenterteilung: 08.08.2007
(21) Anmeldenummer: 03745786.8
(22) Anmeldetag: 04.04.2003
(51) Int. Cl.: H02G 11/00, F16G 13/16

(54) **LEITUNGSFÜHRUNGSEINHEIT ZUR AKTIVEN FÜHRUNG VON LEITUNGEN, KABELN ODER DERGLEICHEN**
LINE GUIDANCE UNIT FOR THE ACTIVE GUIDANCE OF LINES, CABLES OR SIMILAR
UNITÉ DE GUIDAGE DE LIGNES CONÇUE POUR LE GUIDAGE ACTIF DE LIGNES, CÂBLES OU STRUCTURES ANALOGUES

(30) Priorität: 11.04.2002 DE 10216043
(43) Veröffentlichungstag der Anmeldung: 05.01.2005
(73) Patentinhaber: Kabelschlepp GmbH, 57482 Wenden-Gerlingen (DE)
(72) Erfinder: WEHLER, Herbert, 57290 Neunkirchen (DE); KEMPER, Uwe, 57223 Kreuztal (DE)
(74) Vertreter: Neumann, Ditmar
(86) Internationale Anmeldenummer: PCT/EP2003/003536
(87) Internationale Veröffentlichungsnummer: WO 2003/085794

(56) Entgegenhaltungen:
- EP-A- 0 789 167
- WO-A-98/40645
- DE-A1- 10 030 985
- DE-C2- 19 860 948
- "Energieketten-Systeme" Firma igus (Ausgabe 7.2001)

## Beschreibung

Der Gegenstand der Erfindung bezieht sich auf eine Leitungsführungseinheit zur aktiven Führung von Leitungen, Kabeln od. dergleichen.

Leitungsführungseinheiten zur aktiven Führung von Leitungen, Kabeln od. dgl. mit einem ersten Ende, das ortsfest angeordnet ist, und mit einem zweiten Ende, das bewegbar ist, sind in zahlreichen Ausfübrungsformen bekannt. Die klassische Leitungsführungseinheit, die auch als Energieführungskette oder Energiekette bezeichnet wird, besteht aus einzelnen gelenkig miteinander verbundenen Kettengliedern, die einen Führungskanal bilden. In diesem Führungskanal sind Leitungen, Kabel oder dergleichen angeordnet.

Durch die WO 98/40645 ist eine Leitungsführungseinheit bekannt, die aus einstückigen Schutzelementen aus Kunststoff besteht. Das Schutzelement ist einteilig gespritzt oder gegossen und weist untereinander durch verbiegbare Brücken verbundene Teile auf. Das Schutzelement weist ein Bodensegment mit einer Oberseite und einer Unterseite und mindestens ein Wandsegment auf, das durch Biegen und/oder Falten in Richtung der Oberseite des Bodensegmentes durch mechanisches Schließen eines Schließmechanismusses zu einem geschlossenen Kanalabschnitt geformt werden kann, wobei das Schutzelement vorzugsweise mit anderen gleichartigen Schutzelementen so verbunden oder verbindbar ist, dass die Kanalabschnitte in einer Längsrichtung einen Kanal für Leitungen bilden.

Eine weitere Ausführungsform einer Leitungsführungseinheit ist durch die EP 0 789 167 A1 bekannt. Auch diese Leitungsführungseinheit dient zur aktiven Führungvon Leitungen, Kabeln od. dgl. mit einem ersten Ende, das ortsfest angeordnet ist, und mit einem zweiten Ende, das bewegbar ist. Die Leitungsführungseinheit weist einen Kanal auf, der durch Segmente gebildet ist. Die Segmente sind mit einem Tragband verbunden. Während des Betriebes der Leitungsführungseinheit bildet diese und somit auch das Tragband ein Untertrum und ein Obertrum sowie einen zwischen dem Untertrum und dem Obertrum gelegenen Krümmungsbereich, wie er in der Fig. 1 der WO 98/40645 bzw. der Fig. 13 der EP 0 789 167 A1 dargestellt ist.

Eine als nächstliegender Stand der Technik anzusehende Leitungsführungseinheit ist in DE 198 40 012 A beschrieben.

Hiervon ausgehend liegt der vorliegenden Erfindung die Zielsetzung zugrunde, eine Leitungsführungseinheit bereitzustellen, welche eine höhere Tragfähigkeit aufweist.

Diese Aufgabe wird erfindungsgemäß durch eine Leitungsführungseinheit mit den Merkmalen des Anspruchs 1 gelöst. Vorteilhafte Weiterbildungen und Ausgestaltungen, die jeweils einzeln angewandt oder beliebig miteinander kombiniert werden können, sind Gegenstand der jeweils abhängigen Ansprüche.

Die erfindungsgemäße Leitungsführungseinheit dient zur Führung von Leitungen, Kabeln oder dergleichen mit einem ersten Ende, das fixierbar ist, und mit einem zweiten Ende, das bewegbar ist. Die Leitungsführungseinheit weist einen Kanal auf, der durch Segmente gebildet ist. Die Segmente sind mit mindestens einem Tragband verbunden. Zur Erhöhung der Tragfähigkeit der Leitungsführungseinheit wird vorgeschlagen, dass die Segmente Mittel aufweisen, durch die die Leitungsführungseinheit in gestrecktem Zustand bogenförmig bezüglich einer die beiden Enden verbindenden Geraden liegt. Durch diese Mittel erhält die Leitungsführungseinheit eine Vorspannung, so dass nach Bestückung der Leitungsführungseinheit mit Leitungen, Kabeln oder dergleichen, ein Durchhängen der Leitungsführungseinheit verhindert wird. Das Ausmaß der Vorspannung, die in die Leitungsführungseinheit eingebracht wird, kann in Abhängigkeit von den Mitteln gewählt werden. Zu berücksichtigen sind gegebenenfalls die Festigkeitswerte des Segmentes beziehungsweise des Tragbandes. Das Tragband weist sich abwechselnde Tragabschnitte und Gelenkabschnitte auf, und die Tragabschnitte und die Gelenkabschnitte aus Werkstoffen mit sich unterscheidenden Eigenschaften im MehrkomponentenSpritzverfahren ausgebildet sind.

Die Mittel umfassen wenigstens eine gemeinsame Berührungsfläche, deren gedachte Verlängerung die im gestreckten Zustand der Leitungsfürungseinheit die beiden Enden verbindende Gerade schneidet. Der Winkel kann kleiner oder gleich 90° sein.

Es wird erfindungsgemäß vorgeschlagen, dass ein Segment, das die Mittel aufweist, wenigstens einen Vorsprung umfasst, so dass der Vorsprung im gestreckten Zustand der Leitungsführungseinheit an einem benachbarten Segment anliegt.

Bevorzugt ist eine Ausbildung der Leitungsführungseinheit, bei der die Mittel an wenigstens einer Seitenwand ausgebildet sind. Hierdurch kann auch eine erhöhte Stabilität der Leitungsführungseinheit erzielt werden, so dass eine verbesserte Torsionsfestigkeit der Leitungsführungseinheit vorliegt. Gesondert wird vorgeschlagen, dass hierzu die Mittel an den sich überlappenden Bereichen benachbarter Segmente ausgebildet sind.

Durch diese Ausgestaltung wird erreicht, dass der Krümmungsbereich, der bei der Bildung eines Obertrums und eines Untertrums entsteht, relativ gering ist, da lediglich der Gelenkabschnitt mit seiner Biegefestigkeit diesen beeinflusst. Hierbei kann der Tragabschnitt als ein im wesentlichen starrer Körper ausgebildet sein, während der zwei Tragabschnitte verbindende Gelenkabschnitt aus einem Werkstoff hergestellt ist, der sehr biegsam ist. Durch geeignete Auswahl des Werkstoffes, aus dem der Gelenkabschnitt gebildet ist, kann die Biegsamkeit des Gelenkabschnittes variiert beziehungsweise an die Erfordernisse des Krümmungsbereichs der Leitungen oder Schläuche angepasst werden.

Das Tragband mit seinen Tragabschnitten und Gelenkabschnitten ist vorzugsweise nach dem Mehrkomponenten-Spritzverfahren hergestellt. Alternativ können die Tragabschnitte und die Gelenkabschnitte nach dem Mehrkomponenten-Extrusionsverfahren hergestellt sein. Kommt das Mehrkomponenten-Extrusionsverfahren zum Einsatz, so kann das Tragband als solches extrudiert werden. Alternativ kann zunächst ein plat-tenförmiger Rohling mit Trag- und Gelenkabschnitten ausgebildet werden, der anschließend quer zur Extrusionsrichtung zerteilt wird. Diese Herstellungsweise des Tragbandes hat auch den Vorteil, dass Tragbänder mit unterschiedlicher Breite hergestellt werden können.

Zur Verringerung des Eigengewichts des Tragbandes und zur Erhöhung der Festigkeitwird vorgeschlagen, dass wenigstens die Tragabschnitte als Profile, vorzugsweise als Hohlprofile, ausgebildet sind. Insbesondere die Ausbildung der Tragabschnitte als Hohlprofile hat auch den Vorteil, dass eine relativ hohe Materialersparnis erreicht wird, was mit einer ökonomischeren Herstellung des Tragbandes einhergeht. Des weiteren wird mit der Ausgestaltung des Tragbandes als Hohlprofil eine erhöhte Steifigkeit des Tragbandes erzielt

Das Tragband der Leitungsführungseinheit zur aktiven Führung von Leitungen, Kabeln oder dergleichen umfasst vorzugsweise wenigstens zwei miteinander verbundene Tragbandabschnitte. Die Verbindung mehrerer Abschnitte ermöglicht die Ausbildung beliebig langer Tragbänder. Auch kann durch eine derartige Verbindung die Länge des Tragbandes nach einem Baukastenprinzip für die jeweilige Anwendung genau angepasst werden. Es bestehtauch die Möglichkeit, mehrere Abschnitte nebeneinander anzuordnen und diese zu verbinden, so dass auch eine Erhöhung der Variationsmöglichkeit der Breite des Tragbandes und somit der Leitungsführungseinheit erzielt wird. Darüber hinaus kann auch ein Tragbandabschnitt mit wenigstens zwei weiteren Tragbandabschnitten verbunden werden. Hiermit wird eine Aufteilung bzw. eine Zusammenführung der in einer Leitungsführungseinheit geführten Leitungen, Kabeln oder dergleichen auf wenigstens zwei Leitungsführungseinheiten ermöglicht.

Die Tragbandabschnitte sind vorzugsweise kraft- und/oder formschlüssig miteinander verbunden. Insbesondere wird vorgeschlagen, dass die Abschnitte lösbar miteinander verbunden sind. Durch die Lösbarkeit wird eine besondere Flexibilität beim Einsatz der Trag-bändererreicht. Insbesondere können lange Tragbänder bei Bedarf ohne Schwierigkeiten wieder verkürztwerden. Alternativ können die Tragbandabschnitte unlösbar miteinander verbunden sein. Hierbei besteht die Möglichkeit, die Tragbandabschnitte durch geeignete Verbindungsmittel miteinander zu verbinden. Verbindungsmittel können beispielsweise Halteclips sein. Statt der Verwendung von Verbindungsmitteln zur Ausbildung einer unlösbaren Verbindung der Tragabschnitte, werden die Tragabschnitte gemäß einem weiteren Vorschlag miteinander verklebt oder verschweißt.

In einer vorteilhaften Ausgestaltung sind die Tragabschnitte trapezförmig und/oder rautenförmig ausgebildet. Mit Hilfe von trapezförmige und/oder rautenförmigen Tragabschnitten kann die vom Tragband eingenommene Bahn im dreidimensionalen Raum beeinflusst und maßgeschneidert werden. Insbesondere beschreibt das Tragband durch Vorgabe gleichmäßiger Trapeze eine Helix, wobei die Steigung der Helix durch den Winkel der Tragabschnitte zueinander vorgegeben ist. Mit einem derartigen Tragband können beispielsweise Leitungen eines Roboterarms, der eine gleitende Rotationsbewegung durchführt, d.h. eine Kombination aus einer Translationsbewegung und einer Rotationsbewegung, sicher geführt werden. Alternativ sind die Gelenkabschnitte trapezförmig und/oder rautenförmig ausgebildet. Durch eine trapezförmige und/oder rautenförmige Ausbildung der Gelenkabschnitte werden die elastischen Eigenschaften des Tragbandes beeinflusst. Insbesondere können hiermit Kippbewegungen um eine Achse längs zum Tragband zugelassen werden.

Die Leitungsführungseinheit weist einen Kanal auf, der durch Segmente gebildet ist, die mit einem Tragband verbunden sind. Hiermit wird der Raumbedarf für den Einbau der Leitungsführungseinheit verringert. Es besteht auch die Möglichkeit, dass die Segmente mit einem jeden Tragabschnitt verbunden sind. Dies ist nicht zwingend notwendig. So können ausgewählte Tragabschnitte mit Segmenten verbunden sein. Auch können mehrere Tragabschnitte mit nur einem Segment verbunden sein. Hiermit wird die Steifigkeit der Leitungsführungseinheit beeinflusst, welches insbesondere dann wichtig ist, wenn eine lange Leitungsführungseinheit zusammengeschoben, gestaucht, gestapelt oder aufgerollt werden soll und auf Druck belastet wird. Durch die Versteifung mehrerer Tragabschnitte kann das Verhalten der Leitungsführungseinheit bei Druckbelastung gezielt vorgegeben werden. Insbesondere kann zur Erzielung einer besonders dichten Packung einer zusammengelegten Energieführungskette damit kontrolliert vorgegeben werden, in wie viele Lagen sich eine Leitungsführungseinheit legt, wenn sie zusammengeschoben wird.

Für eine leichte Anpassung der erfindungsgemäßen Leitungsführungseinheit an unterschiedliche Verwendungsfälle wird vorgeschlagen, dass die Segmente kraft- und/oder formschlüssig mit den Tragabschnitten verbunden sind. Insbesondere wird vorgeschlagen, dass die Segmente lösbar mit den Tragabschnitten verbunden sind. Statt einer lösbaren Verbindung einzelner Segmente mit den Tragabschnitten besteht auch die Möglichkeit, die Segmente unlösbar mit den Tragabschnitten zu verbinden. Dies kann beispielsweise durch Kleben oder Schweißen erfolgen.

Insbesondere wird vorgeschlagen, dass zur lösbaren Verbindung der Segmente mit den Tragabschnitten diese Verbindungsmittel aufweisen. Die Verbindungsmittel können als Clipanordnungen oder Steckverbindungen ausgestaltet sein.

Vorzugsweise wird eine Leitungsführungseinheit vorgeschlagen, bei der die Segmente Seitenwände aufweisen und jeder Tragabschnitt wenigstens eine Seitenwand als Verbindungsmittel eine Ausnehmung und/ oder einen ersten Vorsprung aufweist, die so ausgebildet sind, dass der erste Vorsprung in die Ausnehmung eingreift. Hierdurch wird die Möglichkeit einer einfachen und kompakten Bauweise der erfindungsgemäßen Leitungsführungseinheit erreicht. Insbesondere kann durch diese Maßnahme die Leitungsführungseinheit nach einem Baukastenprinzip für den jeweiligen konkreten Anwendungsfall angepasst werden.

Gemäß einer noch weiteren vorteilhaften Ausgestaltung der Leitungsführungseinheit wird vorgeschlagen, dass wenigstens ein Tragabschnitt eine quer zur Längsrichtung des Tragbandes verlaufende Durchführung aufweist, durch die sich wenigstens ein Verbindungselement hindurch erstreckt, das die Seitenwände eines Segmentes verbindet Hierdurch wird eine baukastenartige Ausbildung der Leitungsführungseinheit bereitgestellt, die eine hohe Flexibilität hinsichtlich unterschiedlicher Anwendungsfälle aufweist, wobei die Anzahl der zum Aufbau der Leitungsführungseinheit notwendigen Bauteile relativ gering ist.

Zur Vereinfachung der Montage der Leitungsführungseinheit wird gemäß einer noch weiteren vorteilhaften Ausgestaltung der erfindungsgemäßen Leitungsführungseinheit vorgeschlagen, dass wenigstens ein Segment Seitenwände aufweist, die durch einen ersten Quersteg verbunden sind. Die Seitenwände weisen jeweils einen zweiten Vorsprung auf, die einander zugewandt sind, wobei der Tragabschnitt zwischen dem ersten Quersteg und den zweiten Vorsprüngen angeordnet ist. Durch ein Zusammendrücken der den ersten beziehungsweise zweiten Vorsprüngen gegenüberliegenden Endbereichen der Seitenwände wird der Abstand zwischen den Vorsprüngen vergrößert, so dass das Band in den zwischen dem ersten Quersteg und den Vorsprüngen liegenden freien Raum eingeführt werden kann, ohne dass es hierzu einer komplizierten Handhabung bedarf.

Vorteilhafterweise weist wenigstens ein Segment Seitenwände auf, die durch einen zweiten Quersteg verbunden sind. Der zweite Quersteg trägt zur Steifigkeit der Leitungsführungseinheit bei. Auch kann durch ihn eine Abdeckung des Innenraums der Leitungsführungseinheit bewirkt werden, indem der zweite Quersteg das Segment im wesentlichen abdeckt. Alternativ weist wenigstens ein Segment Seitenwände auf, wobei mindestens eine Seitenwand einen Teilsteg aufweist, welcher der gegenüberliegenden Seitenwand zugewandt ist. Mit Hilfe des Teilsteges können Leitungen, Kabel oder dergleichen auf einfache Weise in die Leitungsführungseinheit eingelegt oder aus ihr herausgenommen werden. Mit Hilfe eines Teilsteges ist es ebenso möglich, durch ein Zusammendrücken der gegenüberliegenden Endbereiche der Seitenwände, den Abstand zwischen den Vorsprüngen zu vergrößern, um das Tragband in den zwischen dem ersten Quersteg und den Vorsprüngen freien Raum einzuführen.

Vorteilhafterweise weisen wenigstens zwei benachbarte Segmente jeweils eine Seitenwand auf, wobei wenigsten die eine Seitenwand einen Überlappungsbereich aufweist, der die andere Seitenwand überlappt. Der Überlappungsbereich kann zwei Funktionen haben: zum einen bewirkt er eine Abdichtung zwischen den Segmenten, so dass die Leitungen, die Kabel oder dergleichen weniger Einflüssen der Umgebung ausgesetzt sind. Zum anderen bewirkt der Überlappungsbereich eine verbesserte Stabilität insbesondere eine höhere Steifigkeit der Leitungsführungseinheit gegenüber einer unerwünschten Verdrehung oder Verkippung der Segmente zueinander.

Bevorzugt ist der Überlappungsbereich im wesentlichen kreissegmentförmig ausgebildet. Hierbei ist vorzugsweise das Kreissegment nach dem Kippwinkel der Tragabschnitte zu bemessen. Durch einen kreissegmentförmig ausgestalteten Überlappungsbereich wird eine hohe Steifigkeit beziehungsweise eine gute Abdichtung der Leitungsführungseinheit bei wenig Materialverbrauch erzielt und das Gewicht der Leitungsführungseinheit verringert.

In einer besonderen Ausgestaltung sind die Segmente mit zwei Tragbändern verbunden. Hierbei werden die Tragbänder im wesentlichen parallel geführt. Durch die parallele Führung derTragbänder können vergleichsweise breite Leitungsführungseinheiten mit einer nur geringen Bauhöhe gebildet werden. Insbesondere kann hiermit Material gespart werden. Auch kann hiermit die Breite der Leitungsführungseinheit für den jeweiligen Anwendungsfall angepasst werden.

Weitere Einzelheiten und Vorteile des erfindungsgemäßen Tragbandes sowie der erfindungsgemäßen Leitungsführungseinheit werden im folgenden anhand der in der Zeichnung dargestellten Ausführungsbeispiele erläutert, ohne dass der Gegenstand der Erfindung durch diese Ausführungsbeispiele beschränkt wird.

Es zeigen schematisch:
- Fig. 1: Eine Leitungsführungseinheit in der perspektivischen Schrägansicht,
- Fig. 2: ein Segment der Leitungsführungseinheit nach Fig. 1 in der perspektivischen Schrägansicht,
- Fig. 3: eine alternative Ausführungsform des Segmentes nach Fig. 2 in der Frontansicht,
- Fig. 4: das Segment nach Fig. 2 in der Seitenansicht,
- Fig. 5: eine erfindungsgemäße Ausführungsform eines Segmentes für eine erfindungsgemäße Leitungsführungseinheit in perspektivischer Schrägansicht,
- Fig. 6: ein Abschnitt eines Tragbandes im Längsschnitt,
- Fig. 7: zwei miteinander verbundene Abschnitte nach Fig. 6,
- Fig. 8: eine erfindungsgemäße Energieführungseinheit mit Segmenten nach Fig. 5,
- Fig. 9: ein Segment nach Fig. 2 in der Draufsicht,
- Fig. 10: eine alternative Ausführungsform einer Seitenwand nach Fig. 4 in der Seitenansicht,
- Fig. 11: ein weiteres Tragband in perspektivischer Schrägansicht,
- Fig. 12: ein alternatives Tragband in der Draufsicht,
- Fig. 13: eine Platte zur Herstellung eines Tragbandes in der Draufsicht und
- Fig. 14: vergrößert die Mittel.

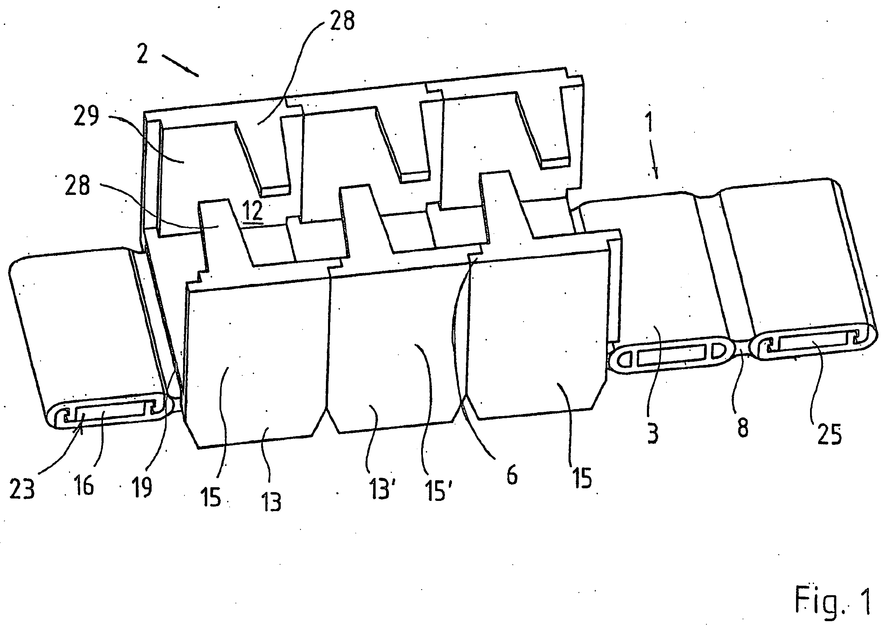

Figur 1 zeigt eine erfindungsgemäße Leitungsführungseinheit 2 mit einem Tragband 1 in perspektivischer Schrägansicht, wobei das Tragband 1 Tragabschnitte 3 und Gelenkabschnitte 8 umfasst, die miteinander mit Hilfe einer Zwei-Komponenten-Spritztechnik miteinander verbunden sind. An dem Tragband 1 sind Segmente 13,13' befestigt, die Seitenwände 15, 15' aufweisen, wodurch ein Kanal 12 geschaffen wird, der Leitungen oder Kabel oder dergleichen, welche nicht abgebildet sind, aufnehmen kann. Jede Seitenwand 15 liegt einer weiteren Seitenwand 29 gegenüber. Die Seitenwände 15, 15' weisen jeweils einen Teilsteg 28 auf, welcher sich in Richtung auf die gegenüberliegende Seitenwand 29 erstreckt. Mit Hilfe der Teilstege 28 ist ein Einbringen von Leitungen oder Kabeln in den Kanal 12 auf einfache Weise möglich.

Die Tragabschnitte 3 sind mit einem Profil 23 ausgebildet, welches das Gewicht des Tragbandes 1 reduziert und die Steifigkeit des Tragabschnitts 3 erhöht. Das Profil 23 umfasst eine Ausnehmung 16, an dem die Segmente 13, 13' bzw. die Seitenwände 15, 15', 29 befestigt werden können. Die Seitenwände 15, 15', 29 weisen einen Überlappungsbereich 6 auf, mit dem bei Krümmung der Leitungsführungseinheit 2 der Kanal 12 an den Seitenwänden 15, 15', 29 abgedichtet wird. Der Überlappungsbereich 6 bewirkt darüber hinaus eine zusätzliche Stabilität der Leitungsführungseinheit 2 durch Aufnahme von seitlichen Kräften, die durch die Seitenwände 15, 15', 29 aufgebracht werden. Die Segmente 13, 13' sind mit den Überlappungsabschnitten 6 miteinander rotationsfest um die Längsachse des Tragbandes 1 verbunden. Eine derartige Leitungsführungseinheit 2 ist auf einfache Weise preiswert herstellbar und zeichnet sich durch eine hohe Vielfalt und Flexibilität in der Anwendung aus.

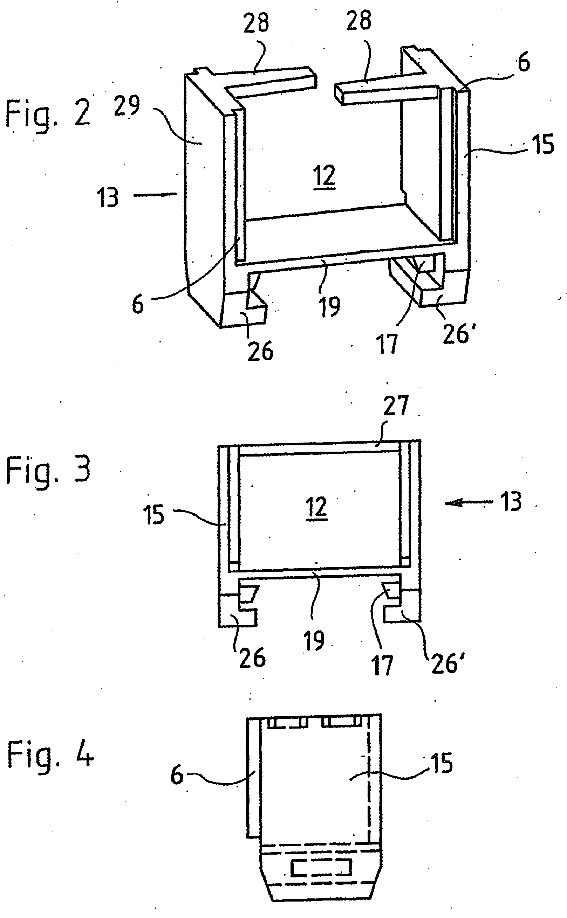

Figur 2 zeigt das Segment 13 nach Figur 1 in der perspektivischen Schrägansicht mit der Seitenwand 15 und der gegenüberliegenden Seitenwand 29, die durch einen ersten Quersteg 19 miteinander verbunden sind und den Kanal 12 bilden. Der Kanal 12 ist weiterhin durch Teilstege 28 begrenzt. Die Seitenwände 15, 29 weisen den Überlappungsbereich 6 auf, mit dem das Segment 13 an ein benachbartes Segment 13' verbunden werden kann. Unterhalb des ersten Querstegs 19 befindet sich ein erster Vorsprung 17, der in die Ausnehmung 16 des Tragabschnitts 3 des Tragbands 1 greifen kann. Ebenso unterhalb des ersten Querstegs 19 weisen die Seitenwände 15,29 jeweils einen zweiten Vorsprung 26, 26' auf, die einander zugewandt sind, wobei der Tragabschnitt 3 zwischen dem ersten Querschnitt 19 und den zweiten Vorsprüngen 26, 26' anordenbar ist.

Figur 3 zeigt das Segment 13 nach Figur 2 in der Frontansicht, wobei die Teilstege 28 als zweiter Quersteg 27 ausgebildet ist, so dass der Kanal 12 vollständig geschlossen ist. Zu erkennen ist auch, dass das Tragband 1 zwischen den zweiten Vorsprüngen 26, 26' und dem ersten Quersteg 19 fixiert werden kann. Zu einer Fixierung trägt darüber hinaus der erste Vorsprung 17 bei, der in die Ausnehmung 16 des Tragbandes 1 greift.

Figur 4 zeigt das Segment 13 nach Fig. 2 in der Seitenansicht. Zu erkennen ist die Seitenwand 15 mit dem Überlappungsbereich 6 zur Verbindung der Seitenwand 15 mit einer benachbarten Seitenwand.

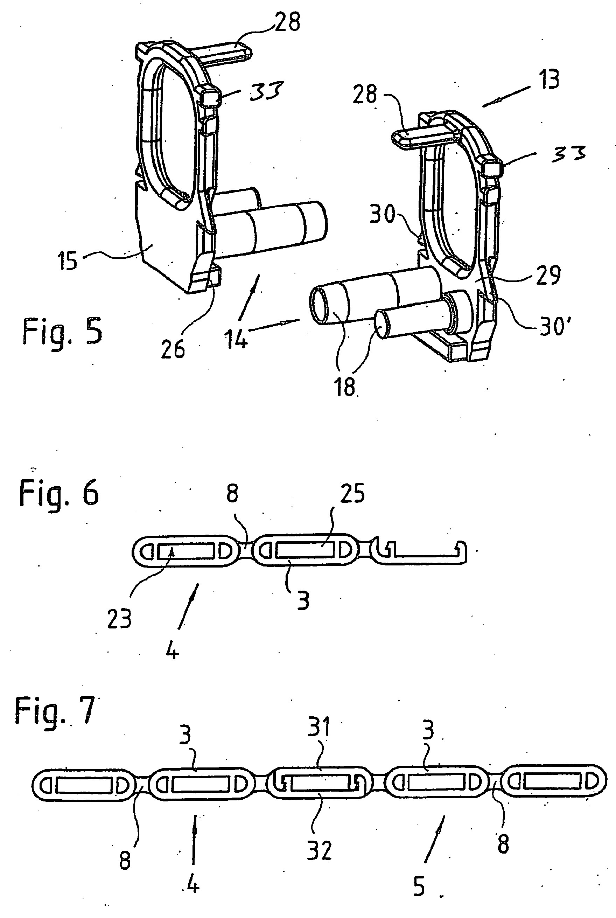

Figur 5 zeigt ein zusammensetzbares Segment in einer perspektivischen Schrägansicht mit Verbindungsmitteln 15, die durch Verbindungselemente 18 gebildet werden, mit denen die Seitenwände 15, 29 miteinander verbunden werden können. Das Tragband 1 wird mit seinem Tragabschnitt 13 zwischen dem Verbindungselement 18 und dem zweiten Vorsprung 26 eingespannt. Ein dritter Vorsprung 30, 30' trägt zur weiteren Stabilisierung der Leitungsführungseinheit 2 bei, in dem ein dritter Vorsprung 30 eines Segmentes 13 hinter den dritten Vorsprung 30' eines benachbarten Segmentes 13' greift.

Der Überlappungsbereich ist dabei so ausgebildet, dass die Leitungsführungseinheit im gestreckten Zustand bogenförmig bezüglich einer der die beiden Enden verbindenden geraden Linie ist. Hierdurch wird eine Vorspannung der Leitungsführungseinheit erreicht. Hierzu sind im Überlappungsbereich die Seitenwände entsprechend ausgebildet.

Alternativ oder zusätzlich können am oberen Endbereich der Wände Vorsprünge 33 ausgebildet sein, durch die benachbarte Segmente um eine im Tragbandbereich liegende Gelenkachse gegeneinander verschwenkt werden, so dass im unbelasteten Zustand die Leitungsführungseinheit bogenförmig gekrümmt ist.

Die Figur 6 zeigt einen ersten Abschnitt 4 eines erfindungsgemäßen Tragbandes 1 im Längsschnitt. Die Tragabschnitte 3 sind durch Gelenkabschnitte 8 miteinander verbunden, wobei die Tragabschnitte 3 als Profile 23 ausgebildet sind.

Figur 7 zeigt zwei miteinander verbundene Abschnitte, einen ersten Abschnitt 4 und einen zweiten Abschnitt 5, die lösbar miteinander verbunden sind. Hiermit kann die Länge des Tragbandes 1 je nach Anwendungsfall verlängert beziehungsweise verkürzt werden. Zur lösbaren Verbindung wird ein erstes Verbindungsstück 31 und ein zweites Verbindungsstück 32 verwendet, die ineinander greifen und vorzugsweise miteinander verclippt werden können.

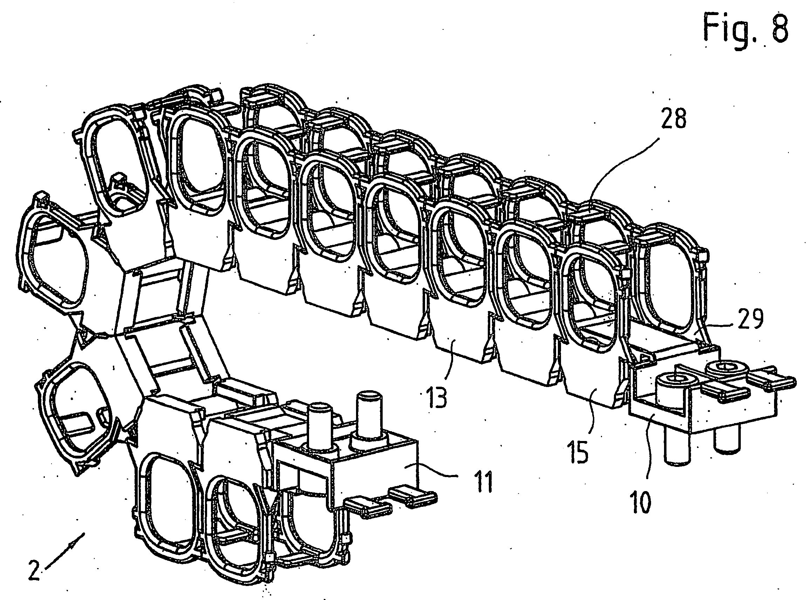

Figur 8 zeigt eine alternative Ausführungsform der erfindungsgemäßen Leitungsführungseinheit 2 mit Segmenten 13 und Seitenwänden 15, wobei ein erstes Ende 10 der Leitungsführungseinheit 2 an einem festen Ort im Raum fixierbar ist und ein zweites Ende 11 der Leitungsführungseinheit 2 an einem beweglichen Teil, beispielsweise einem Roboterarm, der nicht dargestellt ist, befestigbar ist.

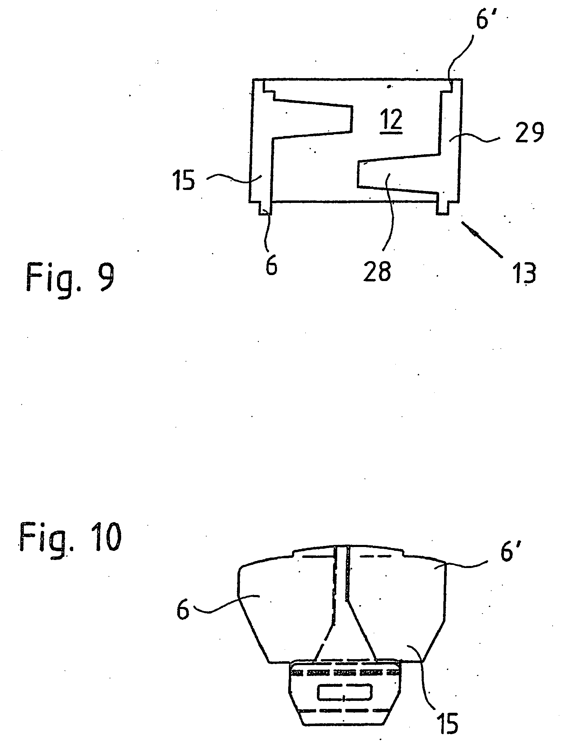

Figur 9 zeigt das Segment 13 nach Figur 2 in der Draufsicht. Die Seitenwände 15, 29 weisen Teilstege 28 auf. Die Seitenwände 15, 29 weisen Überlappungsbereiche 6, 6' auf. Sie dienen der Stabilisierung der Leitungsführungseinheit 2 gegenüber Verdrehung entlang einer Längsachse des Tragbandes 1 beziehungsweise gegenüber Verkantung zweier benachbarter Segmente 13. Die Überlappungsbereiche 6, 6' dichten den Kanal 12 zur Seite hin ab.

Figur 10 zeigt eine Seitenwand mit einer alternativen Ausgestaltung des Überlappungsbereichs 6, 6', wobei der Überlappungsbereich 6, 6' als Kreissegment ausgestaltet ist. Dieses ist insbesondere dann vorteilhaft, wenn das Tragband 1 beziehungsweise die Leitungsführungseinheit 2 gekrümmt ist und somit die zwischen den Segmenten 13, 13' entstehenden Öffnungen abgedeckt werden müssen.

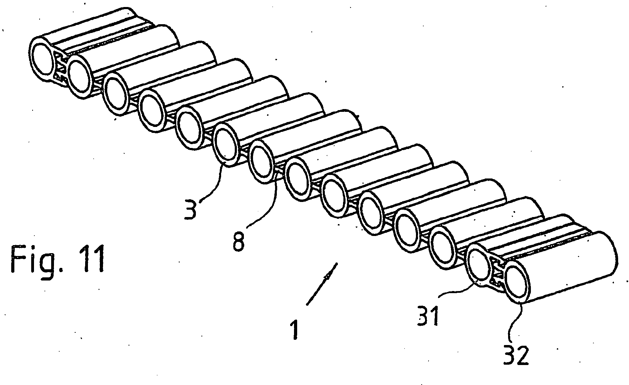

In Figur 11 ist eine weitere Ausführungsform des erfindungsgemäßen Tragbandes 1 dargestellt, wobei die Tragabschnitte 3 rohrförmig, insbesondere als Hohlrohre und die Gelenkabschnitte 8 als Stege ausgebildet sind. Das erste Verbindungsstück 31 stellt eine Aufnahme für das zweite Verbindungsstück 32 dar. Mit Hilfe der beiden Verbindungsstücke 31, 32 kann das Tragband 1 beliebig verlängert oder in seiner Länge angepasst werden. Auch kann das Tragband 1 hiermit an seinen Enden fixiert werden.

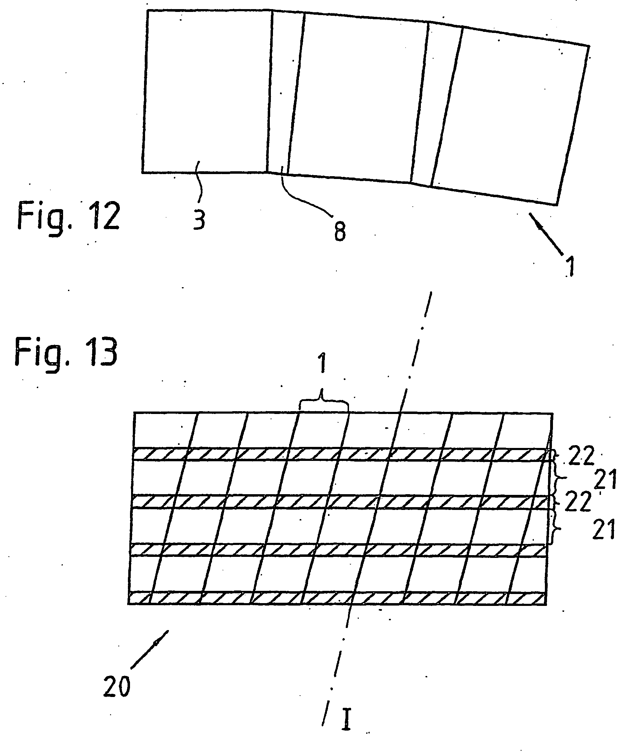

Figur 12 zeigt eine weitere Ausführungsform des erfindungsgemäßen Tragbandes 1 mit Tragabschnitten 3 und Gelenkabschnitten 8, wobei der Tragabschnitt3 beziehungsweise der Gelenkabschnitt 8 trapezförmig beziehungsweise rautenförmig ausgebildet ist. Durch eine trapezförmige Ausgestaltung des Tragabschnitts 13 wird eine bestimmte Bahn, die das Tragband 1 im dreidimensionalen Raum beschreiben kann, vorgegeben. Bei gleichmäßigen Trapezen kann das Tragband 1 eine Bewegung auf einer Helix ausführen.

Figur 13 zeigt eine Platte 20, mit der eine Vielzahl von Tragbändem 1 gleichzeitig hergestellt werden können, indem eine derartige Platte 20 mit Tragstreifen 21 und Gelenkstreifen 22 in einem Zwei-KomponentenVerfahren entweder extrudiert oder gespritzt wird und die Platte 20 in Tragbänder 1 in einer Richtung quer zu den Tragstreifen 21 beziehungsweise Gelenkstreifen 22 geschnitten wird. Dabei kann die Richtung der Schnitte senkrecht zu den Tragstreifen 21 beziehungsweise Gelenkstreifen 22 verlaufen. Sie können aber auch quer dazu liegen. Hierdurch entstehen trapezförmige Gelenkabschnitte 8 und Tragabschnitte 3.

Das Tragband 1 einer Leitungsführungseinheit 2 zur aktiven Führung von Leitungen, Kabeln oder dergleichen weist sich abwechselnde Tragabschnitte 3 und Gelenkabschnitte 8 auf und die Tragabschnitte 3 und die Gelenkabschnitt 8 sind aus Werkstoffen mit sich unterscheidenden Eigenschaften im Mehrkomponentenverfahren gebildet. Mit Hilfe des Tragbandes 1, der erfindungsgemäßen Leitungsführungseinheit 2, die ein derartiges. Tragband 1 umfasst, kann auf einfache, robuste und preiswerte Weise eine Führung von Leitungen, Kabeln oder dergleichen bewirkt werden.

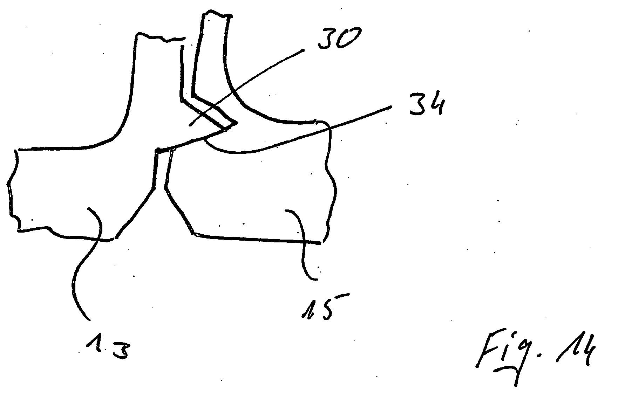

In der Figur 14 sind die Seitenwände benachbarter Segmente dargestellt. Die Seitenwände 13, 15 weisen Mittel auf, durch die die Leitungsführungseinheit im gestreckten Zustand bogenförmig bezüglich einer der die beiden Enden verbindenden Gerade liegt Die Mittel weisen eine gemeinsame Berührungsfläche 34 auf, deren gedachte Verlängerung die im gestreckten Zustand der Leitungsführungseinheit, die die beiden Enden verbindende Gerade, schneidet. Die Mittel sind durch sich überlappende Bereiche gebildet. Bei diesen sich überlappenden Bereichen kann es sich um die in der Figur 5 beschriebenen Vorsprünge 30 handeln.

### Bezugszeichenliste

- 1: Tragband
- 2: Leitungsführungseinheit
- 3: Tragabschnitte
- 4: erster Abschnitt
- 5: zweiter Abschnitt
- 6, 6': Überlappungsbereich
- 8: Gelenkabschnitt
- 10: erstes Ende
- 11: zweites Ende
- 12: Kanal
- 13, 13': Segmente
- 14: Verbindungsmittel
- 15,15': Seitenwand
- 16: Ausnehmung
- 17: erster Vorsprung
- 18: Verbindungselement
- 19: erster Quersteg
- 20: Platte
- 21: Tragstreifen
- 22: Gelenkstreifen
- 23: Profil
- 25: Durchführung
- 26,26': zweiter Vorsprung
- 27: zweiter Quersteg
- 28: Teilsteg
- 29: gegenüberliegende Seitenwand
- 30,30': dritter Vorsprung
- 31: erstes Verbindungsstück
- 32: zweites Verbindungsstück
- 33: Vorsprung
- 34: Berührungsfläche
- I: Richtung

## Patentansprüche

1. Leittungsführungseinheit (2) zur Führung von Leitungen, Kabeln oder dergleichen mit einem ersten Ende (10), das fixierbar ist, und mit einem zweiten Ende (11), das bewegbar ist, wobei die Leitungsführungseinheit (2) einen Kanal (12) aufweist, der durch Segmente (13) gebildet ist, die mit mindestens einem Tragband (1) verbunden sind, wobei die Segmente (13) Mittel (33) aufweisen, durch die die Leitungsführungseinheit (2) im gestreckten Zustand bogenförmig bezüglich einer die beiden Enden (10, 11) verbindenden Geraden liegt, und
die Mittel (33) wenigstens eine gemeinsame Berührungsfläche (34) aufweisen, deren gedachte Verlängerung die im gestreckten Zustand der Leitungsführungseinheit (2) die beiden Enden (10, 11) verbindende Gerade schneidet, **dadurch gekennzeichnet, dass** ein Segment (13,13') das Mittel (33) aufweist, wobei dieses wenigstens einen Vorsprung (30, 30') umfasst, welcher im gestreckten Zustand der Leitungsführungseinbeit an einem benachbarten Segment anlieg und dass das Tragband (1) sich abwechselnde Tragabschnitte (3) und Gelenkabschnitte (8) aufweist, und die Tragabschnitte (3) und die Gelenkabschnitte (8) aus Werkstoffen mit sich unterscheidenden Eigenschaften im Mehrkomponentenverfahren gebildet sind.

2. Leitungsführungseinheit nach Anspruch 1, **dadurch gekennzeichnet, dass** die Mittel (33) an wenigstens einer Seitenwand (15, 15') ausgebildet sind.

3. Leitungsführungseinheit nach Anspruch 1 oder 2, **dadurch gekennzeichnet, dass** die Mittel (33) an sich überlappenden Bereichen benachbarter Segmente (13, 13') ausgebildet sind.

4. Leitungführungseinheit nach Anspruch 1, 2 oder 3, **dadurch gekennzeichnet, dass** die Tragabschnitte (3) und die Gelenkabschnitte (8) nach dem Mehrkomponenten-Spritzverfahren hergestellt sind.

5. Leitungsführungseinheit nach Anspruch 1, 2, oder 3, **dadurch gekennzeichnet, dass** die Tragabschnitte (3) und die Gelenkabschnitte (8) nach dem Mehrkomponenten-Extrusionsverfahren hergestellt sind

6. Leitungsführungseinheit nach einem der Ansprüch 1 bis 5, **dadurch gekennzeichnet, dass** die Tragabschnitte (3) als Profile (23), vorzugsweise als Hohlprofile ausgebildet sind.

7. Leitungsfürhungseinheit nach einem der Ansprüche 1 bis 6, **dadurch gekennzeichnet, dass** das Tragband (I) durch wenigstens zwei miteinander verbundene Abschnitte (4, 5) gebildet ist.

8. Leitungsführungseinheit nach Anspruch 7, **dadurch gekennzeichnet, dass** die Abschnitte (4, 5) kraft-und/oder formschlüssig miteinander verbunden sind.

9. Leitungsführungseinheit nach einem der Ansprüche 7 oder 8, **dadurch gekennzeichnet dass** die Abschnitte (4, 5) lösbar miteinander verbunden sind.

10. Leitungsführungseinheit nach einem der Ansprüche 1 bis 9, **dadurch gekennzeichnet, dass** die Tragabschnitte (3) trapezförmig und/oder rautenförmig sind.

11. Leitungsführungseinheit nach einem der Ansprüche 1 bis 9, **dadurch gekennzeichnet, dass** die Gelenkabschnitte (8) trapezförmig und/oder rautenförmig sind.

12. Leitungsführungseinheit nach einem der Ansprüche 1 bis 11, **dadurch gekennzeichnet, dass** die Segmente (13) kraft- und/oder formschlüssig mit den Tragabschnitten (3) verbunden sind.

13. Leitungsführungseinheit (2) nach einem der Ansprüche 1 bis 11, **dadurch gekennzeichnet, dass** die Segmente (13) lösbar mit den Tragabschnitten (3) verbunden sind.

14. Leitungsführungseinheit (2) nach einem derAnsprüche 1 bis 13, **dadurch gekennzeichnet, dass** Segmente (13) und die Tragabschnitte (3) Verbindungs-mittel (14) aufweisen.

15. Leitungsführungseinheit (2) nach Anspruch 14, **dadurch gekennzeichnet, dass** die Segmente (13) Seitenwände (15) aufweisen und jeder Tragabschnitt (3) und/oder wenigstens eine Seitenwand (15) als Verbindungsmittel (14) eine Ausnehmung (16) und/oder einen ersten Vorsprung (17) aufweist, die so ausgebildet sind, dass der erste Vorsprung (17) in die Ausnehmung (16) eingreift.

16. Leitungsführungseinheit (2) nach Anspruch 15, **dadurch gekennzeichnet, dass** wenigstens ein Tragabschnitt (3) einen quer zur Längsrichtung des Tragbandes (1) verlaufende Durchführung (25) aufweist, durch die sich wenigstens ein Verbindungselement (18) hindurch erstreckt, welches die Seitenwände (15) eines Segmentes (13) verbindet.

17. Leitungsführungseinheit (2) nach einem der Ansprüche 1 bis 16, **dadurch gekennzeichnet, dass** wenigstens ein Segment (13) Seitenwände (15) aufweist, die durch einen ersten Quersteg (19) verbunden sind, dass die Seitenwände (15) jeweils einen zweiten Vorsprung (26, 26') aufweisen, die einander zugewandt sind, wobei der Tragabschnitt (3) zwischen dem ersten Quersteg (19) und den zweiten Vorsprüngen (26, 26') angeordnet ist.

18. Leitungsführungseinheit (2) nach einem der Ansprüche 1 bis 17, **dadurch gekennzeichnet, dass** wenigstens ein Segment (13) Seitenwände (15) aufweist, die durch einen zweiten Quersteg (27) verbunden sind.

19. Leitungsführungseinheit (2) nach einem der Ansprüche 1 bis 18, **dadurch gekennzeichnet, dass** wenigstens ein Segment (13) Seitenwände (15, 29) aufweist, wobei mindestens eine Seitenwand (15) einen Teilsteg (28) aufweist, welcher der gegenüberliegenden Seitenwand (29) zugewandt ist.

20. Leitungsführungseinheit (2) nach Ansprüche 1 bis 17, **dadurch gekennzeichnet, dass** die Segmente (13) mit zwei Tragbändern (1) verbunden sind.

## Claims

1. Line guidance unit (2) for the guidance of lines, cables or similar with a first end (10) that can be fixed and with a second end (11), which is mobile, wherein the line guidance unit (2) has a channel (12), which is formed by segments (13), which are joined together with at least one support strip (1), wherein the segments (13) have means (33) through which the line guidance unit (2) lies in the extended state in an arc-like shape with respect to a straight line connecting the two ends (10, 11) and the means (33) have at least on common contact surface (34), the imaginary lengthening of which intersects the straight line connecting the two ends (10, 11) in the extended state of the line guidance unit (2), **characterized in that** a segment (13, 13'), which has means (33), wherein this includes at least one protrusion (30, 30'), which lies against a neighboring segment in the extended state of the line guidance unit and that the support strip (1) has alternating support sections (3) and link sections (8) and that the support sections (3) and the link sections (8) are made from materials with different properties using the multi-component method..

2. Line guidance unit according to claim 1, **characterized in that** the means (33) are formed on at least one side wall (15, 15').

3. Line guidance unit according to claim 1 or 2, **characterized in that** the means (33) are formed on overlapping regions of neighboring segments (13, 13').

4. Line guidance unit according to claims 1, 2 or 3, **characterized in that** the support sections (3) and the link sections (8) are produced by the multi-component injection method.

5. Line guidance unit according to claims 1, 2 or 3, **characterized in that** the support sections (3) and the link sections (8) are produced by the multi-component extrusion method.

6. Line guidance unit according to successively claims 1 to 5, **characterized in that** the support sections (3) are designed as profiles (23), preferably as hollow profiles.

7. Line guidance unit according to one of claims 1 to 6, **characterized in that** the support strip (1) is formed from at least two sections (4, 5) joined together.

8. Line guidance unit according to claim 7, **characterized in that** the sections (4, 5) are joined together force-fittingly and/or form-fittingly.

9. Line guidance unit according to one of claims 7 or 8, **characterized in that** the sections (4, 5) are joined to one another so that they can be separated.

10. Line guidance unit according to one of claims 1 to 9, **characterized in that** the support sections (3) are trapezoidal and/or rhomboidal.

11. Line guidance unit according to one of claims 1 to 9, **characterized in that** the link sections (8) are trapezoidal and/or rhomboidal.

12. Line guidance unit according to one of claims 1 to 11, **characterized in that** the segments (13) are joined force-fittingly and/or form-fittingly to the support sections (3).

13. Line guidance unit (2) according to one of claims 1 to 11, **characterized in that** the segment3s (13) are joined to the support sections (3) so that they can be separated.

14. Line guidance unit (2) according to one of claims 1 to 13, **characterized in that** the segments (13) and the support sections (3) have joining means (14).

15. Line guidance unit (2) according to claim 14, **characterized in that** the segments (13) have side walls (15) and each support section (3) and/or at least one side wall (15) has a recess (16) and/or a first protrusion (17) as joining means (14), which are designed so that the first protrusion (17) engages in the recess (16).

16. Line guidance unit (2) according to claim 15, **characterized in that** at least one support section (3) has a leadthrough (25) going transversally to the longitudinal direction of the support strip (1) through which at least one joining element (18) extends, which joins the side walls (15) of a segment (13).

17. Line guidance unit (2) according to one of claims 1 to 16, **characterized in that** at least one segment (13) has side walls (15) which are joined through a first transverse bridge (19), that each of the side walls (15) has a second protrusion (26, 26'), which are facing one another, whereby the support section (3) is arranged between the first transverse bridge (19) and the second protrusions (26, 26').

18. Line guidance unit (2) according to one of claims 1 to 17, **characterized in that** at least one segment (13) has side walls (15), which are joined through a second transverse bridge (27).

19. Line guidance unit (2) according to one of claims 1 to 18, **characterized in that** at least one segment (13) has side walls (15, 29), wherein at least one side wall (15) has a partial bridge (28), which is facing the opposite wall (29).

20. Line guidance unit (2) according to claims 1 to 19, **characterized in that** the segments (13) are joined to two support strips (1).

## Revendications

1. Unité de guidage de lignes (2) pour le guidage de lignes, câbles ou structures analogues, avec une première extrémité (10) qui est fixable et avec une deuxième extrémité (11) qui est amovible, dans quel cas l'unité de guidage de lignes (2) a un canal (12) qui est formé par des segments (13) qui sont reliés à au moins une bande porteuse (1), les segments (13) présentant des moyens (33) par lesquels en état allongé l'unité de guidage de lignes (2) se présente en forme d'arc par rapport à une droite reliant les deux extrémités (10, 11), et les moyens (33) ont au moins une surface de contact commune (34), dont l'allongement imaginaire coupe en état allongé de l'unité de guidage de lignes (2) la droite reliant les deux extrémités (10, 11), **caractérisée en ce qu'**un segment (13, 13') a le moyen (33), lequel comporte au moins une saillie (30, 30'), qui en état allongé de l'unité de guidage de lignes est appliquée contre un segment adjacent et ce que la bande porteuse (1) a des tronçons de support (3) et des tronçons d'articulation (8) s'alternant (3) et les tronçons de support (3) et les tronçons d'articulation (8) sont formés par un procédé multicomposants de matériaux ayant des caractéristique différentes..

2. Unité de guidage de lignes selon la revendication 1, **caractérisée en ce que** les moyens (33) sont réalisés sur au moins une paroi latérale (15, 15').

3. Unité de guidage de lignes selon la revendication 1 ou 2, **caractérisée en ce que** les moyens (33) sont réalisés à des régions se recouvrant de segments (13, 13') adjacents.

4. Unité de guidage de lignes selon des revendications 1, 2 ou 3, **caractérisée en ce que** les tronçons de support (3) et les tronçons d'articulation (8) sont fabriqués selon le procédé de moulage par injection de multicomposants.

5. Unité de guidage de lignes selon des revendications 1, 2 ou 3, **caractérisée en ce que** les tronçons de support (3) et les tronçons d'articulation (8) sont fabriqués selon le procédé d'extrusion de multicomposants.

6. Unité de guidage de lignes selon des revendications tour à tour 1 à 5, **caractérisée en ce que** les tronçons de support (3) sont réalisés comme des profils (23), de préférence comme des profils creux.

7. Unité de guidage de lignes selon l'une des revendications 1 à 6, **caractérisée en ce que** la bande porteuse (1) est formée par au moins deux tronçons (4, 5) reliés l'un à l'autre.

8. Unité de guidage de lignes selon la revendication 7, **caractérisée en ce que** les tronçons (4, 5) sont reliés les uns aux autres par coopération de forces et/ou par coopération de formes.

9. Unité de guidage de lignes selon l'une des revendications 7 ou 8, **caractérisée en ce que** les tronçons (4, 5) sont reliés les uns aux autres de façon détachable.

10. Unité de guidage de lignes selon l'une des revendications 1 à 9, **caractérisée en ce que** les tronçons de support (3) ont une forme trapézoïdale et/ou une forme de losange.

11. Unité de guidage de lignes selon l'une des revendications 1 à 9, **caractérisée en ce que** les tronçons d'articulation (8) ont une forme trapézoïdale et/ou une forme de losange.

12. Unité de guidage de lignes selon l'une des revendications 1 à 11, **caractérisée en ce que** les segments (13) sont reliés aux tronçons de support (3) par coopération de forces et/ou par coopération de formes.

13. Unité de guidage de lignes (2) selon l'une des revendications 1 à 11, **caractérisée en ce que** les segments (13) sont reliés de façon détachable aux tronçons de support (3).

14. Unité de guidage de lignes (2) selon l'une des revendications 1 à 13, **caractérisée en ce que** des segments (13) et les tronçons de support (3) ont des moyens de liaison (14).

15. Unité de guidage de lignes (2) selon la revendication 14, **caractérisée en ce que** les segments (13) ont des parois latérales (15) et chaque tronçon de support (3) et/ou au moins une paroi latérale (15) a comme moyen de liaison (14) un dégagement (16) et/ou une première saillie (17) qui sont formés de manière telle que la première saillie (17) s'engage dans le dégagement (16).

16. Unité de guidage de lignes (2) selon la revendication 15, **caractérisée en ce qu'**au moins un tronçon de support (3) a une traversée (25) s'étendant transversalement par rapport à la direction longitudinale de la bande porteuse (1), à travers laquelle s'étend au moins un élément de liaison (18) qui relie les parois latérales (15) d'un segment (13).

17. Unité de guidage de lignes (2) selon l'une des revendications 1 à 16, **caractérisée en ce qu'**au moins un segment (13) a des parois latérales (15) qui sont reliées par une première traverse (19), de sorte que les parois latérales (15) ont respectivement une deuxième saillie (26, 26') qui sont tournées l'une vers l'autre, le tronçon de support (3) étant agencé entre la première traverse (19) et les deuxièmes saillies (26, 26').

18. Unité de guidage de lignes (2) selon l'une des revendications 1 à 17, **caractérisée en ce qu'**au moins un segment (13) a des parois latérales (15), qui sont reliées par une deuxième traverse (17).

19. Unité de guidage de lignes (2) selon l'une des revendications 1 à 18, **caractérisée en ce qu'**au moins un segment (13) a des parois latérales (15, 29), dans quel cas au moins une paroi latérale (15) a une traverse partielle (28), laquelle est tournée vers la paroi latérale opposée (29).

20. Unité de guidage de lignes (2) selon les revendications 1 à 19, **caractérisée en ce que** les segments (13) sont reliés à deux bandes porteuses (1).
